# EUROPÄISCHE PATENTSCHRIFT

(11) **EP 0 837 866 B1**
(45) Veröffentlichungstag und Bekanntmachung des Hinweises auf die Patenterteilung: **14.11.2001**
(21) Anmeldenummer: 96924832.7
(22) Anmeldetag: 01.07.1996
(51) Int. Cl.: C07F 17/00

(54) **VERFAHREN ZUR UMWANDLUNG DER ACHIRALEN MESO-FORM ODER DES RACEMATS EINES ANSA-METALLOCENKOMPLEXES ODER DEREN MISCHUNGEN IN EINES SEINER ENANTIOMEREN**
PROCESS FOR CONVERTING THE ACHIRAL MESO FORM OR THE RACEMATE OF AN ANSA-METALLOCENE COMPLEX OR MIXTURES THEREOF INTO ONE OF ITS ENANTIOMERS
PROCEDE DE TRANSFORMATION DE LA MESO-FORME ACHIRALE OU D'UN RACEMATE D'UN COMPLEXE ANSA-METALLOCENE OU DE SES MELANGES EN UN DE SES ENANTIOMERES

(30) Priorität: 11.07.1995 DE 19525184
(43) Veröffentlichungstag der Anmeldung: 29.04.1998
(73) Patentinhaber: BASF AKTIENGESELLSCHAFT, 67056 Ludwigshafen (DE)
(72) Erfinder: FISCHER, David, D-67161 Gönnheim (DE); LANGHAUSER, Franz, D-67098 Bad Dürkheim (DE); STÜRMER, Rainer, D-67127 Rödersheim (DE); KERTH, Jürgen, D-67316 Carlsberg (DE); SCHWEIER, Günther, D-67159 Friedelsheim (DE); BRINTZINGER, Hans-Herbert, CH-8274 Taegerswilen (CH); SCHMIDT, Katrin, D-78467 Konstanz (DE)
(86) Internationale Anmeldenummer: EP9602869
(87) Internationale Veröffentlichungsnummer: WO9703081

(56) Entgegenhaltungen:
- JOURNAL OF ORGANOMETALLIC CHEMISTRY, Bd. 232, 1982, Seiten 233-247, XP002015340 WILD, F.R.W.P. ET AL.: "ansa-metallocene derivatives. iv. synthesis and molecular structures of chiral ansa-titanocene derivatives with bridged tetrahydroindenyl ligands"
- THE JOURNAL OF ORGANIC CHEMISTRY, Bd. 54, 1989, Seiten 4154-4158, XP002015341 COLLINS, S. ET AL.: "additions of chiral allyltitanocenes to aldehydes: diastereoselective synthesis of homoallylic alcohols with a recyclable chiral transition metal reagent"
- JOURNAL OF ORGANOMETALLIC CHEMISTRY, Bd. 342, 1988, Seiten 21-29, XP002015342 COLLINS, S. ET AL.: "x-ray structures of ethylenebis(tetrahydroindenyl)-titanium and -zirconium dichlorides: a revision" in der Anmeldung erwähnt
- MAKROMOL. CHEM., RAPID COMMUN., Bd. 8, 1987, Seiten 305-310, XP000605211 TAKEMURA, S. ET AL.: "ISOTACTIC POLYMERIZATION OF PROPENE WITH (ETA-1,1'-ETHYLENEDI-4,5,6,7-TETRAHYDROIND ENYL)ZIRCONIUM DICHLORIDE COMBINED WITH METHYLALUMINOXANE"
- JOURNAL OF THE AMERICAN CHEMICAL SOCIETY, Bd. 114, 1992, Seiten 9300-9304, XP002015343 LEVI-MINZI, N. ET AL.: "PHOTOCHEMISTRY IN BIOLOGICAL MATRICES: ACTIVATION OF RACEMIC MIXTURES AND INTERCONVERSION OF ENANTIOMERS"

## Beschreibung

Die vorliegende Erfindung betrifft ein Verfahren zur Umwandlung der achiralen meso-Form oder des Racemats eines ansa-Metallocenkomplexes oder deren Mischungen in eines seiner Enantiomeren.

Neben der stereospezifischen Olefinpolymerisation bietet in zunehmendem Maße die enantioselektive organische Synthese interessante Anwendungsmöglichkeiten für chirale ansa-Metallocenkomplexe von Metallen der IV. Nebengruppe des Periodensystems der Elemente. Beispielhaft seien hier enantioselektive Hydrierungen prochiraler Substrate genannt, beispielsweise prochiraler Olefine, wie in R. Waymouth, P. Pino, J. Am. Chem. Soc. 112 (1990), S. 4911-4914 beschrieben, oder prochiraler Ketone, Imine und Oxime, wie in der WO 92/9545 beschreiben.

Weiterhin seien genannt die Herstellung optisch aktiver Alkene durch enantioselektive Oligomerisation, wie in W. Kaminsky et al., Angew. Chem. 101 (1989), S. 1304-1306 beschrieben, sowie die enantioselektive Cyclopolymerisation von 1,5-Hexadienen, wie in R. Waymouth, G. Coates, J. Am. Chem. Soc. 113 (1991), S. 6270 - 6271 beschrieben.

Im Unterschied zur stereospezifischen Olefinpolymerisation erfordern alle Anwendungen in der enantioselektiven organischen Synthese den Einsatz eines enantiomerenreinen ansa-Metallocenkomplexes, d. h. aus dem bei der Metallocensynthese anfallenden Diastereomerengemisch (rac.- u. meso-form) muß zunächst die meso-Form abgetrennt werden und die verbleibende rac.-Form muß einer Enantiomerentrennung unterworfen werden.

Aus S. Collins et al., J. Org. Chem. 54, 1989, Seiten 4154 - 5158 ist bekannt, daß man ein Enantiomer einer racemischen Mischung eines Metallocenkomplexes mit einem enantiomerenreinen Hilfsreagens umsetzen und das Umsetzungsprodukt aus der Mischung abtrennen kann. Durch Spaltung des Umsetzungsprodukts erhält man dann einen enantiomerenreinen Metallocenkomplex.

Da sowohl die meso-Form als auch eines der beiden Enantiomeren verworfen werden muß, ist die Ausbeute an enantiomerenreinem ansa-Metallocenkomplex sehr gering.

Außerdem ist aus S. Collins et al., J. Organomet. Chem. 342, 1988, Seiten 21 - 29 bekannt, daß die meso-Form eines Metallocens photochemisch in eine racemische Mischung überführt werden kann.

Diastereoselektive oder sogar enantioselektive Synthesen für chirale ansa-Metallocenkomplexe sind nur für sehr wenige, spezielle Ligandensysteme bekannt, die beispielsweise in Brintzinger et al., Organometallics 11 (1992), S. 3600 - 3607 und in Rheingold et al., Organometallics 11 (1992), S. 1869 - 1876 beschrieben sind.

Aufgabe der vorliegenden Erfindung war es daher, ein Verfahren zur quantitativen Umwandlung der meso-Form oder des Racemats eines ansa-Metallocenkomplexes oder deren Mischungen in eines seiner Enantiomeren zur Verfügung zu stellen, wobei diese Umwandlung verfahrenstechnisch einfach und kostengünstig sein sollte.

Demgemäß wurde ein Verfahren zur Umwandlung der achiralen meso-Form oder des Racemats eines ansa-Metallocenkomplexes oder deren Mischungen in eines seiner Enantiomeren gefunden, wobei die Umwandlung photochemisch in Anwesenheit eines enantiomerenreinen Hilfsreagens erfolgt.

Die Begriffe "meso-Form", "Racemat" und somit auch "Enantiomere" in Verbindung mit ansa-Metallocenkomplexen sind bekannt und beispielsweise in Rheingold et al., Organometallics 11 (1992), S. 1869 - 1876 beschrieben.

Der Begriff "enantiomerenrein" wird hier so verstanden, daß mindestens 90 % einer Verbindung in Form des einen Enantiomeren vorliegen.

Als ansa-Metallocenkomplexe, die bei dem erfindungsgemäßen Verfahren eingesetzt werden können, eignen sich besonders solche, der allgemeinen Formel I 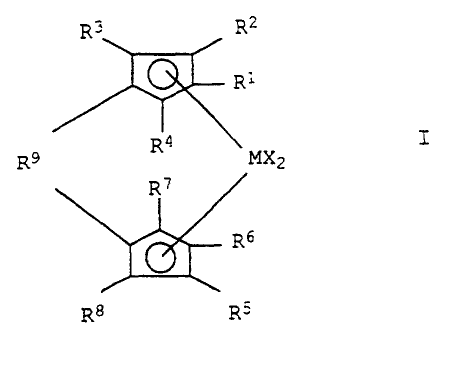 in der die Substituenten und Indices folgende Bedeutung haben:
- M: Titan, Zirkonium, Hafnium, Vanadium, Niob oder Tantal,
- X: Fluor, Chlor, Brom, Iod, Wasserstoff, C₁- bis C₁₀-Alkyl, C₆- bis C₁₅-Aryl oder -OR¹⁰,
- wobei R¹⁰: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R¹ bis R⁸: Wasserstoff, C₁- bis C₁₀-Alkyl, 5 - bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis C-Atome aufweisende cyclische Gruppen stehen können, oder Si(R¹¹)₃ mit
- R¹¹: C₁- bis C₁₀-Alkyl, C₆- bis C₁₅-Aryl oder C₃- bis C₁₀-Cycloalkyl,
- R⁹: 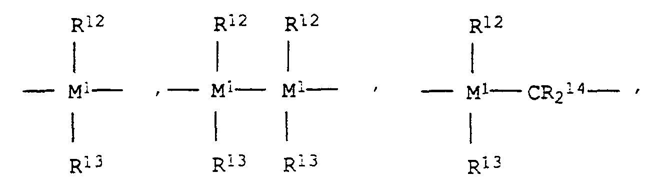 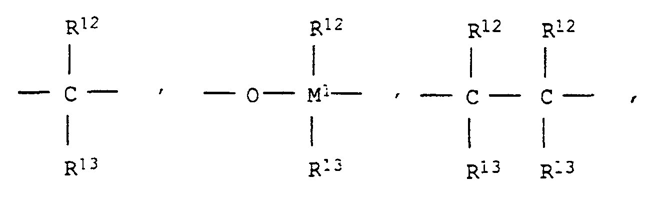 = BR¹², = AIR¹², -Ge-, -Sn-, -O-, -S-, = SO, = SO₂, = NR¹², = CO, = PR¹² oder = P(O)R¹² ist, wobei R¹², R¹³ und R¹⁴ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
- M¹: Silicium, Germanium oder Zinn ist

Besonders geeignet sind ansa-Metallocenkomplexe der allgemeinen Formel I, in der
- M: für Titan, Zirkonium oder Hafnium steht,
- X: Chlor oder C₁- bis C₆-Alkyl bedeutet,
- R¹ bis R⁸: Wasserstoff, C₁- bis C₆-Alkyl, C₁- bis C₁₂-Aryl oder wobei zwei benachbarte Reste gemeinsam für 4 bis 15, insbesondere 8 bis 12 C-Atome aufweisende cyclische Gruppen stehen
- und M¹: Silicum bedeutet.

Bevorzugt sind ansa-Metallocenkomplexe der allgemeinen Formel I, die in 2-Position an den Cyclopentadienyl-Ringen substituiert sind, d.h., daß R⁴ und R⁷ in der allgemeinen Formel I von Wasserstoff verschieden sind und insbesondere für Methyl, Ethyl, n-Propyl, iso-Propyl, n-Butyl, tert.-Butyl oder Phenyl stehen.

Weiterhin sind solche ansa-Metallocenkomplexe bevorzugt, die silylverbrückt sind, d. h. daß M¹ für Silicium steht.

Beispiele für besonders geeignete ansa-Metallocenkomplexe sind u.a.:
Dimethylsilandiylbis(2-methyl-4-methyl-1-cyclopentadienyl)zirkoniumdichlorid
Dimethylsilandiylbis(2-methyl-4-ethyl-1-cyclopentadienyl)zirkoniumdichlorid
Dimethylsilandiylbis(2-methyl-4-propyl-1-cyclopentadienyl)zirkoniumdichlorid
Dimethylsilandiylbis(2-methyl-4-butyl-1-cyclopentadienyl)zirkoniumdichlorid
Dimethylsilandiylbis(2-methyl-4-ⁱpropyl-1-cyclopentadienyl)zirkoniumdichlorid
Dimethylsilandiylbis(2-methyl-4-ⁱbutyl-1-cyclopentadienyl)zirkoniumdichlorid
Dimethylsilandiylbis(2-methyl-4-^{t}butyl-1-cyclopentadienyl)zirkoniumdichlorid
Dimethylsilandiylbis (2-methyl-4-trimethylsilyl-1-cyclopentadienyl)zirkoniumdichlorid
Dimethylsilandiylbis(2-methyl-4-phenyl-1-cyclopentadienyl)zirkoniumdichlorid
Dimethylsilandiylbis(2-ethyl-4-methyl-1-cyclopentadienyl)zirkoniumdichlorid
Dimethylsilandiylbis(2-ethyl-4-ethyl-1-cyclopentadienyl)zirkoniumdichlorid
Dimethylsilandiylbis(2-ethyl-4-propyl-1-cyclopentadienyl)zirkoniumdichlorid
Dimethylsilandiylbis(2-ethyl-4-butyl-1-cyclopentadienyl)zirkoniumdichlorid
Dimethylsilandiylbis(2-ethyl-4-ⁱpropyl-1-cyclopentadienyl)zirkoniumdichlorid
Dimethylsilandiylbis(2-ethyl-4-ⁱbutyl-1-cyclopentadienyl)zirkoniumdichlorid
Dimethylsilandiylbis(2-ethyl-4-^{t}butyl-1-cyclopentadienyl)zirkoniumdichlorid
Dimethylsilandiylbis(2-ethyl-4-trimethylsilyl-1-cyclopentadienyl)zirkoniumdichlorid
Dimethylsilandiylbis(2-ethyl-4-phenyl-1-cyclopentadienyl)zirkoniumdichlorid
Dimethylsilandiylbis(2-propyl-4-methyl-1-cyclopentadienyl)zirkoniumdichlorid
Dimethylsilandiylbis(2-propyl-4-ethyl-1-cyclopentadienyl)zirkoniumdichlorid
Dimethylsilandiylbis(2-propyl-4-propyl-l-cyclopentadienyl)zirkoniumdichlorid
Dimethylsilandiylbis (2-propyl-4-butyl-l-cyclopentadienyl)zirkoniumdichlorid
Dimethylsilandiylbis(2-propyl-4-ⁱpropyl-1-cyclopentadienyl)zirkoniumdichlorid
Dimethylsilandiylbis(2-propyl-4-ⁱbutyl-1-cyclopentadienyl)zirkoniumdichlorid
Dimethylsilandiylbis(2-propyl-4-^{t}butyl-1-cyclopentadienyl)zirkoniumdichlorid
Dimethylsilandiylbis(2-propyl-4-trimethylsilyl-1-cyclopentadienyl)zirkoniumdichlorid
Dimethylsilandiylbis(2-propyl-4-phenyl-1-cyclopentadienyl)zirkoniumdichlorid
Dimethylsilandiylbis(2-butyl-4-methyl-1-cyclopentadienyl)zirkoniumdichlorid
Dimethylsilandiylbis(2-butyl-4-ethyl-1-cyclopentadienyl)zirkoniumdichlorid
Dimethylsilandiylbis(2-butyl-4-propyl-1-cyclopentadienyl)zirkoniumdichlorid
Dimethylsilandiylbis(2-butyl-4-butyl-1-cyclopentadienyl)zirkoniumdichlorid
Dimethylsilandiylbis(2-butyl-4-ⁱpropyl-1-cyclopentadienyl)zirkoniumdichlorid
Dimethylsilandiylbis(2-butyl-4-ⁱbutyl-1-cyclopentadienyl)zirkoniumdichlorid
Dimethylsilandiylbis(2-butyl-4-^{t}butyl-1-cyclopentadienyl)zirkoniumdichlorid
Dimethylsilandiylbis(2-butyl-4-trimethylsilyl-1-cyclopentadienyl)zirkoniumdichlorid
Dimethylsilandiylbis(2-butyl-4-phenyl-1-cyclopentadienyl)zirkoniumdichlorid
Dimethylsilandiylbis(2-ⁱpropyl-4-methyl-1-cyclopentadienyl)zirkoniumdichlorid
Dimethylsilandiylbis(2-ⁱpropyl-4-ethyl-1-cyclopentadienyl)zirkoniumdichlorid
Dimethylsilandiylbis(2-ⁱpropyl-4-propyl-1-cyclopentadienyl)zirkoniumdichlorid
Dimethylsilandiylbis(2-ⁱpropyl-4-butyl-1-cyclopentadienyl)zirkoniumdichlorid
Dimethylsilandiylbis(2-ⁱpropyl-4-ⁱpropyl-1-cyclopentadienyl)zirkoniumdichlorid
Dimethylsilandiylbis(2-ⁱpropyl-4-ⁱbutyl-1-cyclopentadienyl)zirkoniumdichlorid
Dimethylsilandiylbis(2-ⁱpropyl-4-^{t}butyl-1-cyclopentadienyl)zirkoniumdichlorid
Dimethylsilandiylbis(2-ⁱpropyl-4-trimethylsilyl-1-cyclopentadienyl)zirkoniumdichlorid
Dimethylsilandiylbis(2-ⁱpropyl-4-phenyl-1-cyclopentadienyl)zirkoniumdichlorid
Dimethylsilandiylbis(2-^{t}butyl-4-methyl-1-cyclopentadienyl)zirkoniumdichlorid
Dimethylsilandiylbis(2-^{t}butyl-4-ethyl-1-cyclopentadienyl)zirkoniumdichlorid
Dimethylsilandiylbis(2-^{t}butyl-4-propyl-1-cyclopentadienyl)zirkoniumdichlorid
Dimethylsilandiylbis(2-^{t}butyl-4-butyl-1-cyclopentadienyl)zirkoniumdichlorid
Dimethylsilandiylbis(2-^{t}butyl-4-ⁱpropyl-1-cyclopentadienyl)zirkoniumdichlorid
Dimethylsilandiylbis(2-^{t}butyl-4-ⁱbutyl-1-cyclopentadienyl)zirkoniumdichlorid
Dimethylsilandiylbis(2-^{t}butyl-4-^{t}butyl-1-cyclopentadienyl)zirkoniumdichlorid
Dimethylsilandiylbis(2-^{t}butyl-4-trimethylsilyl-1-cyclopentadienyl)zirkoniumdichlorid
Dimethylsilandiylbis(2-^{t}butyl-4-phenyl-1-cyclopentadienyl)zirkoniumdichlorid
Dimethylsilandiylbis(2-trimethylsilyl-4-methyl-1-cyclopentadienyl)zirkoniumdichlorid
Dimethylsilandiylbis(2-trimethylsilyl-4-ethyl-1-cyclopentadienyl)zirkoniumdichlorid
Dimethylsilandiylbis(2-trimethylsilyl-4-propyl-1-cyclopentadienyl)zirkoniumdichlorid
Dimethylsilandiylbis(2-trimethylsilyl-4-butyl-1-cyclopentadienyl)zirkoniumdichlorid
Dimethylsilandiylbis(2-trimethylsilyl-4-ⁱpropyl-1-cyclopentadienyl)zirkoniumdichlorid
Dimethylsilandiylbis(2-trimethylsilyl-4-ⁱbutyl-1-cyclopentadienyl)zirkoniumdichlorid
Dimethylsilandiylbis(2-trimethylsilyl-4-^{t}butyl-1-cyclopentadienyl)zirkoniumdichlorid
Dimethylsilandiylbis(2-trimethylsilyl-4-trimethylsilyl-1-cyclopentadienyl)zirkoniumdichlorid
Dimethylsilandiylbis(2-trimethylsilyl-4-phenyl-1-cyclopentadienyl)zirkoniumdichlorid
Dimethylsilandiylbis(2-phenyl-4-methyl-1-cyclopentadienyl)zirkoniumdichlorid
Dimethylsilandiylbis(2-phenyl-4-ethyl-1-cyclopentadienyl)zirkoniumdichlorid
Dimethylsilandiylbis(2-phenyl-4-propyl-1-cyclopentadienyl)zirkoniumdichlorid
Dimethylsilandiylbis(2-phenyl-4-butyl-1-cyclopentadienyl)zirkoniumdichlorid
Dimethylsilandiylbis(2-phenyl-4-ⁱpropyl-1-cyclopentadienyl)zirkoniumdichlorid
Dimethylsilandiylbis (2-phenyl-4-ⁱbutyl-1-cyclopentadienyl)zirkoniumdichlorid
Dimethylsilandiylbis(2-phenyl-4-^{t}butyl-1-cyclopentadienyl)zirkoniumdichlorid
Dimethylsilandiylbis(2-phenyl-4-trimethylsilyl-1-cyclopentadienyl)zirkoniumdichlorid
Dimethylsilandiylbis(2-phenyl-4-phenyl-1-cyclopentadienyl)zirkoniumdichlorid
Dimethylsilandiylbis(2-methyl-1-indenyl)zirkoniumdichlorid
Dimethylsilandiylbis(2-ethyl-1-indenyl)zirkoniumdichlorid
Dimethylsilandiylbis(2-propyl-1-indenyl)zirkoniumdichlorid
Dimethylsilandiylbis(2-butyl-1-indenyl)zirkoniumdichlorid
Dimethylsilandiylbis(2-ⁱpropyl-1-indenyl)zirkoniumdichlorid
Dimethylsilandiylbis(2-^{t}butyl-1-indenyl)zirkoniumdichlorid
Dimethylsilandiylbis(2-trimethylsilyl-1-indenyl)zirkoniumdichlorid
Dimethylsilandiylbis(2-phenyl-1-indenyl)zirkoniumdichlorid
Dimethylsilandiylbis(2-methyl-4,5,6,7-tetrahydro-1-indenyl)zirkoniumdichlorid
Dimethylsilandiylbis(2-ethyl-4,5,6,7-tetrahydro-1-indenyl)zirkoniumdichlorid
Dimethylsilandiylbis(2-propyl-4,5,6,7-tetrahydro-1-indenyl)zirkoniumdichlorid
Dimethylsilandiylbis(2-butyl-4,5,6,7-tetrahydro-1-indenyl)zirkoniumdichlorid
Dimethylsilandiylbis(2-ⁱpropyl-4,5,6,7-tetrahydro-1-indenyl)zirkoniumdichlorid
Dimethylsilandiylbis(2-^{t}butyl-4,5,6,7-tetrahydro-1-indenyl)zirkoniumdichlorid
Dimethylsilandiylbis(2-trimethylsilyl-4,5,6,7-tetrahydro-1-indenyl)zirkoniumdichlorid
Dimethylsilandiylbis(2-phenyl-4,5,6,7-tetrahydro-1-indenyl)zirkoniumdichlorid
Dimethylsilandiylbis(2-methyl-4,7-dimethyl-1-indenyl)zirkoniumdichlorid
Dimethylsilandiylbis(2-ethyl-4,7-dimethyl-1-indenyl)zirkoniumdichlorid
Dimethylsilandiylbis(2-propyl-4,7-dimethyl-1-indenyl)zirkoniumdichlorid
Dimethylsilandiylbis(2-butyl-4,7-dimethyl-1-indenyl)zirkoniumdichlorid
Dimethylsilandiylbis(2-ⁱpropyl-4,7-dimethyl-1-indenyl)zirkoniumdichlorid
Dimethylsilandiylbis(2-^{t}butyl-4,7-dimethyl-1-indenyl)zirkoniumdichlorid
Dimethylsilandiylbis(2-trimethylsilyl-4,7-dimethyl-1-indenyl)zirkoniumdichlorid
Dimethylsilandiylbis(2-phenyl-4,7-dimethyl-1-indenyl)zirkoniumdichlorid
Dimethylsilandiylbis(2-methyl-4,6-di-ⁱpropyl-1-indenyl)zirkoniumdichlorid
Dimethylsilandiylbis(2-ethyl-4,6-di-ⁱpropyl-1-indenyl)zirkoniumdichlorid
Dimethylsilandiylbis(2-propyl-4,6-di-ⁱpropyl-1-indenyl)zirkoniumdichlorid
Dimethylsilandiylbis(2-butyl-4,6-di-ⁱpropyl-1-indenyl)zirkoniumdichlorid
Dimethylsilandiylbis (2-ⁱpropyl-4,6-di-ⁱpropyl-1-indenyl)zirkoniumdichlorid
Dimethylsilandiylbis(2-^{t}butyl-4,6-di-ⁱpropyl-1-indenyl)zirkoniumdichlorid
Dimethylsilandiylbis(2-trimethylsilyl-4,6-di-ⁱpropyl-1-indenyl)zirkoniumdichlorid Dimethylsilandiylbis(2-phenyl-4,6-di-ⁱpropyl-1-indenyl)zirkoniumdichlorid
Dimethylsilandiylbis(2-methyl-1-benzindenyl)zirkoniumdichlorid
Dimethylsilandiylbis(2-ethyl-1-benzindenyl)zirkoniumdichlorid
Dimethylsilandiylbis(2-propyl-1-benzindenyl)zirkoniumdichlorid
Dimethylsilandiylbis(2-butyl-1-benzindenyl)zirkoniumdichlorid
Dimethylsilandiylbis(2-ⁱpropyl-1-benzindenyl)zirkoniumdichlorid
Dimethylsilandiylbis(2-^{t}butyl-1-benzindenyl)zirkoniumdichlorid
Dimethylsilandiylbis(2-trimethylsilyl-1-benzindenyl)zirkoniumdichlorid
Dimethylsilandiylbis(2-phenyl-1-benzindenyl)zirkoniumdichlorid
Dimethylsilandiylbis(2-methyl-4-phenyl-1-indenyl)zirkoniumdichlorid
Dimethylsilandiylbis(2-ethyl-4-phenyl-1-indenyl)zirkoniumdichlorid
Dimethylsilandiylbis(2-propyl-4-phenyl-1-indenyl)zirkoniumdichlorid
Dimethylsilandiylbis(2-butyl-4-phenyl-l-indenyl)zirkoniumdichlorid
Dimethylsilandiylbis(2-ⁱpropyl-4-phenyl-1-indenyl)zirkoniumdichlorid
Dimethylsilandiylbis(2-^{t}butyl-4-phenyl-1-indenyl)zirkoniumdichlorid
Dimethylsilandiylbis(2-trimethylsilyl-4-phenyl-1-indenyl)zirkoniumdichlorid
Dimethylsilandiylbis(2-phenyl-4-phenyl-1-indenyl)zirkoniumdichlorid
Dimethylsilandiylbis(2-methyl-4-naphthyl-1-indenyl)zirkoniumdichlorid
Dimethylsilandiylbis(2-ethyl-4-naphthyl-1-indenyl)zirkoniumdichlorid
Dimethylsilandiylbis(2-propyl-4-naphthyl-1-indenyl)zirkoniumdichlorid
Dimethylsilandiylbis(2-butyl-4-naphthyl-1-indenyl)zirkoniumdichlorid
Dimethylsilandiylbis(2-ⁱpropyl-4-naphthyl-1-indenyl)zirkoniumdichlorid
Dimethylsilandiylbis(2-^{t}butyl-4-naphthyl-1-indenyl)zirkoniumdichlorid
Dimethylsilandiylbis(2-trimethylsilyl-4-naphthyl-1-indenyl)zirkoniumdichlorid
Dimethylsilandiylbis(2-phenyl-4-naphthyl-1-indenyl)zirkoniumdichlorid
Dimethylsilandiylbis(2-methyl-4-methyl-1-cyclopentadienyl)titaniumdichlorid
Dimethylsilandiylbis(2-methyl-4-ethyl-1-cyclopentadienyl)titaniumdichlorid
Dimethylsilandiylbis(2-methyl-4-propyl-1-cyclopentadienyl)titaniumdichlorid
Dimethylsilandiylbis(2-methyl-4-butyl-1-cyclopentadienyl)titaniumdichlorid
Dimethylsilandiylbis(2-methyl-4-ⁱpropyl-1-cyclopentadienyl)titaniumdichlorid
Dimethylsilandiylbis(2-methyl-4-ⁱbutyl-1-cyclopentadienyl)titaniumdichlorid
Dimethylsilandiylbis(2-methyl-4-^{t}butyl-1-cyclopentadienyl)titaniumdichlorid
Dimethylsilandiylbis(2-methyl-4-trimethylsilyl-1-cyclopentadienyl)titaniumdichlorid
Dimethylsilandiylbis(2-methyl-4-phenyl-1-cyclopentadienyl)titaniumdichlorid
Dimethylsilandiylbis(2-ethyl-4-methyl-1-cyclopentadienyl)titaniumdichlorid
Dimethylsilandiylbis(2-ethyl-4-ethyl-1-cyclopentadienyl)titaniumdichlorid
Dimethylsilandiylbis(2-ethyl-4-propyl-1-cyclopentadienyl)titaniumdichlorid
Dimethylsilandiylbis(2-ethyl-4-butyl-1-cyclopentadienyl)titaniumdichlorid
Dimethylsilandiylbis (2-ethyl-4-ⁱpropyl-1-cyclopentadienyl) titaniumdichlorid
Dimethylsilandiylbis(2-ethyl-4-ⁱbutyl-1-cyclopentadienyl)titaniumdichlorid
Dimethylsilandiylbis (2-ethyl-4-^{t}butyl-1-cyclopentadienyl)titaniumdichlorid
Dimethylsilandiylbis (2-ethyl-4-trimethylsilyl-1-cyclopentadienyl)titaniumdichlorid
Dimethylsilandiylbis(2-ethyl-4-phenyl-1-cyclopentadienyl)titaniumdichlorid
Dimethylsilandiylbis(2-propyl-4-methyl-1-cyclopentadienyl)titaniumdichlorid
Dimethylsilandiylbis(2-propyl-4-ethyl-1-cyclopentadienyl)titaniumdichlorid
Dimethylsilandiylbis(2-propyl-4-propyl-1-cyclopentadienyl)titaniumdichlorid
Dimethylsilandiylbis(2-propyl-4-butyl-1-cyclopentadienyl)titaniumdichlorid
Dimethylsilandiylbis(2-propyl-4-ⁱpropyl-1-cyclopentadienyl)titaniumdichlorid
Dimethylsilandiylbis(2-propyl-4-ⁱbutyl-1-cyclopentadienyl)titaniumdichlorid
Dimethylsilandiylbis(2-propyl-4-^{t}butyl-1-cyclopentadienyl)titaniumdichlorid
Dimethylsilandiylbis(2-propyl-4-trimethylsilyl-1-cyclopentadienyl)titaniumdichlorid
Dimethylsilandiylbis(2-propyl-4-phenyl-1-cyclopentadienyl)titaniumdichlorid
Dimethylsilandiylbis(2-butyl-4-methyl-1-cyclopentadienyl)titaniumdichlorid
Dimethylsilandiylbis(2-butyl-4-ethyl-1-cyclopentadienyl)titaniumdichlorid
Dimethylsilandiylbis(2-butyl-4-propyl-1-cyclopentadienyl)titaniumdichlorid
Dimethylsilandiylbis(2-butyl-4-butyl-1-cyclopentadienyl)titaniumdichlorid
Dimethylsilandiylbis(2-butyl-4-ⁱpropyl-1-cyclopentadienyl)titaniumdichlorid
Dimethylsilandiylbis(2-butyl-4-ⁱbutyl-1-cyclopentadienyl)titaniumdichlorid
Dimethylsilandiylbis(2-butyl-4-^{t}butyl-1-cyclopentadienyl)titaniumdichlorid
Dimethylsilandiylbis(2-butyl-4-trimethylsilyl-1-cyclopentadienyl)titaniumdichlorid
Dimethylsilandiylbis(2-butyl-4-phenyl-1-cyclopentadienyl)titaniumdichlorid
Dimethylsilandiylbis(2-ⁱpropyl-4-methyl-1-cyclopentadienyl)titaniumdichlorid
Dimethylsilandiylbis(2-ⁱpropyl-4-ethyl-1-cyclopentadienyl)titaniumdichlorid
Dimethylsilandiylbis(2-ⁱpropyl-4-propyl-1-cyclopentadienyl)titaniumdichlorid
Dimethylsilandiylbis(2-ⁱpropyl-4-butyl-1-cyclopentadienyl)titaniumdichlorid
Dimethylsilandiylbis(2-ⁱpropyl-4-ⁱpropyl-1-cyclopentadienyl)titaniumdichlorid
Dimethylsilandiylbis(2-ⁱpropyl-4-ⁱbutyl-1-cyclopentadienyl)titaniumdichlorid
Dimethylsilandiylbis(2-ⁱpropyl-4-^{t}butyl-1-cyclopentadienyl)titaniumdichlorid
Dimethylsilandiylbis(2-ⁱpropyl-4-trimethylsilyl-1-cyclopentadienyl)titaniumdichlorid
Dimethylsilandiylbis(2-ⁱpropyl-4-phenyl-1-cyclopentadienyl)titaniumdichlorid
Dimethylsilandiylbis(2-^{t}butyl-4-methyl-1-cyclopentadienyl)titaniumdichlorid
Dimethylsilandiylbis(2-^{t}butyl-4-ethyl-1-cyclopentadienyl)titaniumdichlorid
Dimethylsilandiylbis(2-^{t}butyl-4-propyl-1-cyclopentadienyl)titaniumdichlorid
Dimethylsilandiylbis(2-^{t}butyl-4-butyl-1-cyclopentadienyl)titaniumdichlorid
Dimethylsilandiylbis(2-^{t}butyl-4-ⁱpropyl-1-cyclopentadienyl)titaniumdichlorid
Dimethylsilandiylbis(2-^{t}butyl-4-ⁱbutyl-1-cyclopentadienyl)titaniumdichlorid
Dimethylsilandiylbis(2-^{t}butyl-4-^{t}butyl-1-cyclopentadienyl)titaniumdichlorid
Dimethylsilandiylbis(2-^{t}butyl-4-trimethylsilyl-1-cyclopentadienyl)titaniumdichlorid
Dimethylsilandiylbis(2-^{t}butyl-4-phenyl-1-cyclopentadienyl)titaniumdichlorid
Dimethylsilandiylbis(2-trimethylsilyl-4-methyl-1-cyclopentadienyl)titaniumdichlorid
Dimethylsilandiylbis(2-trimethylsilyl-4-ethyl-1-cyclopentadienyl)titaniumdichlorid
Dimethylsilandiylbis(2-trimethylsilyl-4-propyl-1-cyclopentadienyl)titaniumdichlorid
Dimethylsilandiylbis(2-trimethylsilyl-4-butyl-1-cyclopentadienyl)titaniumdichlorid
Dimethylsilandiylbis(2-trimethylsilyl-4-ⁱpropyl-1-cyclopentadienyl)titaniumdichlorid
Dimethylsilandiylbis(2-trimethylsilyl-4-ⁱbutyl-1-cyclopentadienyl)titaniumdichlorid
Dimethylsilandiylbis(2-trimethylsilyl-4-^{t}butyl-1-cyclopentadienyl)titaniumdichlorid
Dimethylsilandiylbis(2-trimethylsilyl-4-trimethylsilyl-1-cyclopentadienyl)titaniumdichlorid
Dimethylsilandiylbis(2-trimethylsilyl-4-phenyl-1-cyclopentadienyl)titaniumdichlorid
Dimethylsilandiylbis(2-phenyl-4-methyl-1-cyclopentadienyl)titaniumdichlorid
Dimethylsilandiylbis(2-phenyl-4-ethyl-1-cyclopentadienyl)titaniumdichlorid
Dimethylsilandiylbis(2-phenyl-4-propyl-1-cyclopentadienyl)titaniumdichlorid
Dimethylsilandiylbis(2-phenyl-4-butyl-1-cyclopentadienyl)titaniumdichlorid
Dimethylsilandiylbis(2-phenyl-4-ⁱpropyl-1-cyclopentadienyl)titaniumdichlorid
Dimethylsilandiylbis(2-phenyl-4-ⁱbutyl-1-cyclopentadienyl)titaniumdichlorid
Dimethylsilandiylbis(2-phenyl-4-^{t}butyl-1-cyclopentadienyl)titaniumdichlorid
Dimethylsilandiylbis(2-phenyl-4-trimethylsilyl-1-cyclopentadienyl)titaniumdichlorid
Dimethylsilandiylbis(2-phenyl-4-phenyl-1-cyclopentadienyl)titaniumdichlorid
Dimethylsilandiylbis(2-methyl-1-indenyl)titaniumdichlorid
Dimethylsilandiylbis(2-ethyl-1-indenyl)titaniumdichlorid
Dimethylsilandiylbis(2-propyl-1-indenyl)titaniumdichlorid
Dimethylsilandiylbis(2-butyl-1-indenyl)titaniumdichlorid
Dimethylsilandiylbis(2-ⁱpropyl-1-indenyl)titaniumdichlorid
Dimethylsilandiylbis(2-^{t}butyl-1-indenyl)titaniumdichlorid
Dimethylsilandiylbis(2-trimethylsilyl-1-indenyl)titaniumdichlorid
Dimethylsilandiylbis(2-phenyl-1-indenyl)titaniumdichlorid
Dimethylsilandiylbis(2-methyl-4,5,6,7-tetrahydro-1-indenyl)titaniumdichlorid
Dimethylsilandiylbis(2-ethyl-4,5,6,7-tetrahydro-1-indenyl)titaniumdichlorid
Dimethylsilandiylbis(2-propyl-4,5,6,7-tetrahydro-1-indenyl)titaniumdichlorid
Dimethylsilandiylbis(2-butyl-4,5,6,7-tetrahydro-1-indenyl)titaniumdichlorid
Dimethylsilandiylbis(2-ⁱpropyl-4,5,6,7-tetrahydro-1-indenyl)titaniumdichlorid
Dimethylsilandiylbis(2-^{t}butyl-4,5,6,7-tetrahydro-1-indenyl)titaniumdichlorid
Dimethylsilandiylbis(2-trimethylsilyl-4,5,6,7-tetrahydro-1-indenyl)titaniumdichlorid
Dimethylsilandiylbis(2-phenyl-4,5,6,7-tetrahydro-1-indenyl)titaniumdichlorid
Dimethylsilandiylbis(2-methyl-4,7-dimethyl-1-indenyl)titaniumdichlorid
Dimethylsilandiylbis(2-ethyl-4,7-dimethyl-1-indenyl)titaniumdichlorid
Dimethylsilandiylbis(2-propyl-4,7-dimethyl-1-indenyl)titaniumdichlorid
Dimethylsilandiylbis(2-butyl-4,7-dimethyl-1-indenyl)titaniumdichlorid
Dimethylsilandiylbis(2-ⁱpropyl-4,7-dimethyl-1-indenyl)titaniumdichlorid
Dimethylsilandiylbis(2-^{t}butyl-4,7-dimethyl-1-indenyl)titaniumdichlorid
Dimethylsilandiylbis(2-trimethylsilyl-4,7-dimethyl-1-indenyl)titaniumdichlorid
Dimethylsilandiylbis(2-phenyl-4,7-dimethyl-1-indenyl)titaniumdichlorid
Dimethylsilandiylbis(2-methyl-4,6-di-ⁱpropyl-1-indenyl)titaniumdichlorid
Dimethylsilandiylbis(2-ethyl-4,6-di-ⁱpropyl-1-indenyl)titaniumdichlorid
Dimethylsilandiylbis(2-propyl-4,6-di-ⁱpropyl-1-indenyl)titaniumdichlorid
Dimethylsilandiylbis(2-butyl-4,6-di-ⁱpropyl-1-indenyl)titaniumdichlorid
Dimethylsilandiylbis(2-ⁱpropyl-4,6-di-ⁱpropyl-1-indenyl)titaniumdichlorid
Dimethylsilandiylbis(2-^{t}butyl-4,6-di-ⁱpropyl-1-indenyl)titaniumdichlorid
Dimethylsilandiylbis (2-trimethylsilyl-4,6-di-ⁱpropyl-l-indenyl)titaniumdichlorid
Dimethylsilandiylbis(2-phenyl-4,6-di-ⁱpropyl-1-indenyl)titaniumdichlorid
Dimethylsilandiylbis(2-methyl-1-benzindenyl)titaniumdichlorid
Dimethylsilandiylbis(2-ethyl-1-benzindenyl)titaniumdichlorid
Dimethylsilandiylbis(2-propyl-1-benzindenyl)titaniumdichlorid
Dimethylsilandiylbis(2-butyl-1-benzindenyl)titaniumdichlorid
Dimethylsilandiylbis(2-ⁱpropyl-1-benzindenyl)titaniumdichlorid
Dimethylsilandiylbis(2-^{t}butyl-1-benzindenyl)titaniumdichlorid
Dimethylsilandiylbis (2-trimethylsilyl-1-benzindenyl)titaniumdichlorid
Dimethylsilandiylbis(2-phenyl-1-benzindenyl)titaniumdichlorid
Dimethylsilandiylbis(2-methyl-4-phenyl-1-indenyl)titaniumdichlorid
Dimethylsilandiylbis(2-ethyl-4-phenyl-1-indenyl)titaniumdichlorid
Dimethylsilandiylbis(2-propyl-4-phenyl-1-indenyl)titaniumdichlorid
Dimethylsilandiylbis(2-butyl-4-phenyl-1-indenyl)titaniumdichlorid
Dimethylsilandiylbis(2-ⁱpropyl-4-phenyl-1-indenyl)titaniumdichlorid
Dimethylsilandiylbis(2-^{t}butyl-4-phenyl-1-indenyl)titaniumdichlorid
Dimethylsilandiylbis(2-trimethylsilyl-4-phenyl-l-indenyl)titaniumdichlorid
Dimethylsilandiylbis(2-phenyl-4-phenyl-1-indenyl)titaniumdichlorid
Dimethylsilandiylbis(2-methyl-4-naphthyl-1-indenyl)titaniumdichlorid
Dimethylsilandiylbis(2-ethyl-4-naphthyl-1-indenyl)titaniumdichlorid
Dimethylsilandiylbis(2-propyl-4-naphthyl-1-indenyl)titaniumdichlorid
Dimethylsilandiylbis (2-butyl-4-naphthyl-1-indenyl)titaniumdichlorid
Dimethylsilandiylbis(2-ⁱpropyl-4-naphthyl-1-indenyl)titaniumdichorid
Dimethylsilandiylbis(2-^{t}butyl-4-naphthyl-1-indenyl)titaniumdichlorid
Dimethylsilandiylbis(2-trimethylsilyl-4-naphthyl-1-indenyl)titaniumdichlorid
Dimethylsilandiylbis(2-phenyl-4-naphthyl-1-indenyl)titaniumdichlorid
Dimethylsilandiylbis(2-methyl-4-methyl-1-cyclopentadienyl)hafniumdichlorid
Dimethylsilandiylbis(2-methyl-4-ethyl-1-cyclopentadienyl)hafniumdichlorid
Dimethylsilandiylbis(2-methyl-4-propyl-1-cyclopentadienyl)hafniumdichlorid
Dimethylsilandiylbis(2-methyl-4-butyl-1-cyclopentadienyl)hafniumdichlorid
Dimethylsilandiylbis(2-methyl-4-ⁱpropyl-1-cyclopentadienyl)hafniumdichlorid
Dimethylsilandiylbis(2-methyl-4-ⁱbutyl-1-cyclopentadienyl)hafniumdichlorid
Dimethylsilandiylbis(2-methyl-4-^{t}butyl-1-cyclopentadienyl)hafniumdichlorid
Dimethylsilandiylbis(2-methyl-4-trimethylsilyl-1-cyclopentadienyl)hafniumdichlorid
Dimethylsilandiylbis(2-methyl-4-phenyl-1-cyclopentadienyl)hafniumdichlorid
Dimethylsilandiylbis(2-ethyl-4-methyl-1-cyclopentadienyl)hafniumdichlorid
Dimethylsilandiylbis(2-ethyl-4-ethyl-1-cyclopentadienyl)hafniumdichlorid
Dimethylsilandiylbis(2-ethyl-4-propyl-1-cyclopentadienyl)hafniumdichlorid
Dimethylsilandiylbis(2-ethyl-4-butyl-1-cyclopentadienyl)hafniumdichlorid
Dimethylsilandiylbis(2-ethyl-4-ⁱpropyl-1-cyclopentadienyl)hafniumdichlorid
Dimethylsilandiylbis(2-ethyl-4-ⁱbutyl-1-cyclopentadienyl)hafniumdichlorid
Dimethylsilandiylbis(2-ethyl-4-^{t}butyl-1-cyclopentadienyl)hafniumdichlorid
Dimethylsilandiylbis(2-ethyl-4-trimethylsilyl-1-cyclopentadienyl)hafniumdichlorid
Dimethylsilandiylbis(2-ethyl-4-phenyl-1-cyclopentadienyl)hafniumdichlorid
Dimethylsilandiylbis(2-propyl-4-methyl-1-cyclopentadienyl)hafniumdichlorid
Dimethylsilandiylbis(2-propyl-4-ethyl-1-cyclopentadienyl)hafniumdichlorid
Dimethylsilandiylbis(2-propyl-4-propyl-1-cyclopentadienyl)hafniumdichlorid
Dimethylsilandiylbis(2-propyl-4-butyl-1-cyclopentadienyl)hafniumdichlorid
Dimethylsilandiylbis(2-propyl-4-ⁱpropyl-1-cyclopentadienyl)hafniumdichlorid
Dimethylsilandiylbis(2-propyl-4-ⁱbutyl-1-cyclopentadienyl)hafniumdichlorid
Dimethylsilandiylbis(2-propyl-4-^{t}butyl-1-cyclopentadienyl)hafniumdichlorid
Dimethylsilandiylbis(2-propyl-4-trimethylsilyl-1-cyclopentadienyl)hafniumdichlorid
Dimethylsilandiylbis(2-propyl-4-phenyl-1-cyclopentadienyl)hafniumdichlorid
Dimethylsilandiylbis(2-butyl-4-methyl-1-cyclopentadienyl)hafniumdichlorid
Dimethylsilandiylbis(2-butyl-4-ethyl-1-cyclopentadienyl)hafniumdichlorid
Dimethylsilandiylbis(2-butyl-4-propyl-1-cyclopentadienyl)hafniumdichlorid
Dimethylsilandiylbis(2-butyl-4-butyl-1-cyclopentadienyl)hafniumdichlorid
Dimethylsilandiylbis(2-butyl-4-ⁱpropyl-1-cyclopentadienyl)hafniumdichlorid
Dimethylsilandiylbis(2-butyl-4-ⁱbutyl-1-cyclopentadienyl)hafniumdichlorid
Dimethylsilandiylbis(2-butyl-4-^{t}butyl-1-cyclopentadienyl)hafniumdichlorid
Dimethylsilandiylbis(2-butyl-4-trimethylsilyl-1-cyclopentadienyl)hafniumdichlorid
Dimethylsilandiylbis (2-butyl-4-phenyl-1-cyclopentadienyl)hafniumdichlorid
Dimethylsilandiylbis(2-ⁱpropyl-4-methyl-1-cyclopentadienyl)hafniumdichlorid
Dimethylsilandiylbis(2-ⁱpropyl-4-ethyl-1-cyclopentadienyl)hafniumdichlorid
Dimethylsilandiylbis(2-ⁱpropyl-4-propyl-1-cyclopentadienyl)hafniumdichlorid
Dimethylsilandiylbis(2-ⁱpropyl-4-butyl-1-cyclopentadienyl)hafniumdichlorid
Dimethylsilandiylbis(2-ⁱpropyl-4-ⁱpropyl-1-cyclopentadienyl)hafniumdichlorid
Dimethylsilandiylbis(2-ⁱpropyl-4-ⁱbutyl-1-cyclopentadienyl)hafniumdichlorid
Dimethylsilandiylbis(2-ⁱpropyl-4-^{t}butyl-1-cyclopentadienyl)hafniumdichlorid
Dimethylsilandiylbis(2-ⁱpropyl-4-trimethylsilyl-1-cyclopentadienyl)hafniumdichlorid
Dimethylsilandiylbis (2-ⁱpropyl-4-phenyl-1-cyclopentadienyl)hafniumdichlorid
Dimethylsilandiylbis(2-^{t}butyl-4-methyl-1-cyclopentadienyl)hafniumdichlorid
Dimethylsilandiylbis(2-^{t}butyl-4-ethyl-1-cyclopentadienyl)hafniumdichlorid
Dimethylsilandiylbis(2-^{t}butyl-4-propyl-1-cyclopentadienyl)hafniumdichlorid
Dimethylsilandiylbis(2-^{t}butyl-4-butyl-1-cyclopentadienyl)hafniumdichlorid
Dimethylsilandiylbis(2-^{t}butyl-4-ⁱpropyl-1-cyclopentadienyl)hafniumdichlorid
Dimethylsilandiylbis(2-^{t}butyl-4-ⁱbutyl-1-cyclopentadienyl)hafniumdichlorid
Dimethylsilandiylbis(2-^{t}butyl-4-^{t}butyl-1-cyclopentadienyl)hafniumdichlorid
Dimethylsilandiylbis(2-^{t}butyl-4-trimethylsilyl-1-cyclopentadienyl)hafniumdichlorid
Dimethylsilandiylbis(2-^{t}butyl-4-phenyl-1-cyclopentadienyl)hafniumdichlorid
Dimethylsilandiylbis(2-trimethylsilyl-4-methyl-1-cyclopentadienyl)hafniumdichlorid
Dimethylsilandiylbis(2-trimethylsilyl-4-ethyl-1-cyclopentadienyl)hafniumdichlorid
Dimethylsilandiylbis(2-trimethylsilyl-4-propyl-1-cyclopentadienyl)hafniumdichlorid
Dimethylsilandiylbis(2-trimethylsilyl-4-butyl-1-cyclopentadienyl)hafniumdichlorid
Dimethylsilandiylbis(2-trimethylsilyl-4-ⁱpropyl-1-cyclopentadienyl)hafniumdichlorid
Dimethylsilandiylbis(2-trimethylsilyl-4-ⁱbutyl-1-cyclopentadienyl)hafniumdichlorid
Dimethylsilandiylbis(2-trimethylsilyl-4-^{t}butyl-1-cyclopentadienyl)hafniumdichlorid
Dimethylsilandiylbis(2-trimethylsilyl-4-trimethylsilyl-1-cyclopentadienyl)hafniumdichlorid
Dimethylsilandiylbis(2-trimethylsilyl-4-phenyl-1-cyclopentadienyl)hafniumdichlorid
Dimethylsilandiylbis(2-phenyl-4-methyl-1-cyclopentadienyl)hafniumdichlorid
Dimethylsilandiylbis(2-phenyl-4-ethyl-1-cyclopentadienyl)hafniumdichlorid
Dimethylsilandiylbis(2-phenyl-4-propyl-1-cyclopentadienyl)hafniumdichlorid
Dimethylsilandiylbis(2-phenyl-4-butyl-1-cyclopentadienyl)hafniumdichlorid
Dimethylsilandiylbis(2-phenyl-4-ⁱpropyl-1-cyclopentadienyl)hafniumdichlorid
Dimethylsilandiylbis(2-phenyl-4-ⁱbutyl-1-cyclopentadienyl)hafniumdichlorid
Dimethylsilandiylbis(2-phenyl-4-^{t}butyl-1-cyclopentadienyl)hafniumdichlorid
Dimethylsilandiylbis(2-phenyl-4-trimethylsilyl-1-cyclopentadienyl)hafniumdichlorid
Dimethylsilandiylbis(2-phenyl-4-phenyl-1-cyclopentadienyl)hafniumdichlorid
Dimethylsilandiylbis(2-methyl-1-indenyl)hafniumdichlorid
Dimethylsilandiylbis(2-ethyl-1-indenyl)hafniumdichlorid
Dimethylsilandiylbis(2-propyl-1-indenyl)hafniumdichlorid
Dimethylsilandiylbis(2-butyl-1-indenyl)hafniumdichlorid
Dimethylsilandiylbis(2-ⁱpropyl-1-indenyl)hafniumdichlorid
Dimethylsilandiylbis(2-^{t}butyl-1-indenyl)hafniumdichlorid
Dimethylsilandiylbis(2-trimethylsilyl-1-indenyl)hafniumdichlorid
Dimethylsilandiylbis(2-phenyl-1-indenyl)hafniumdichlorid
Dimethylsilandiylbis(2-methyl-4,5,6,7-tetrahydro-1-indenyl)hafniumdichlorid
Dimethylsilandiylbis(2-ethyl-4,5,6,7-tetrahydro-1-indenyl)hafniumdichlorid
Dimethylsilandiylbis(2-propyl-4,5,6,7-tetrahydro-1-indenyl)hafniumdichlorid
Dimethylsilandiylbis(2-butyl-4,5,6,7-tetrahydro-1-indenyl)hafniumdichlorid
Dimethylsilandiylbis(2-ⁱpropyl-4,5,6,7-tetrahydro-1-indenyl)hafniumdichlorid
Dimethylsilandiylbis(2-^{t}butyl-4,5,6,7-tetrahydro-1-indenyl)hafniumdichlorid
Dimethylsilandiylbis(2-trimethylsilyl-4,5,6,7-tetrahydro-1-indenyl)hafniumdichlorid
Dimethylsilandiylbis(2-phenyl-4,5,6,7-tetrahydro-1-indenyl)hafniumdichlorid
Dimethylsilandiylbis(2-methyl-4,7-dimethyl-1-indenyl)hafniumdichlorid
Dimethylsilandiylbis(2-ethyl-4,7-dimethyl-1-indenyl)hafniumdichlorid
Dimethylsilandiylbis(2-propyl-4,7-dimethyl-1-indenyl)hafniumdichlorid
Dimethylsilandiylbis(2-butyl-4,7-dimethyl-1-indenyl)hafniumdichlorid
Dimethylsilandiylbis(2-ⁱpropyl-4,7-dimethyl-1-indenyl)hafniumdichlorid
Dimethylsilandiylbis(2-^{t}butyl-4,7-dimethyl-1-indenyl)hafniumdichlorid
Dimethylsilandiylbis(2-trimethylsilyl-4,7-dimethyl-1-indenyl)hafniumdichlorid
Dimethylsilandiylbis(2-phenyl-4,7-dimethyl-1-indenyl)hafniumdichlorid
Dimethylsilandiylbis(2-methyl-4,6-di-ⁱpropyl-1-indenyl)hafniumdichlorid
Dimethylsilandiylbis(2-ethyl-4,6-di-ⁱpropyl-1-indenyl)hafniumdichlorid
Dimethylsilandiylbis(2-propyl-4,6-di-ⁱpropyl-1-indenyl)hafniumdichlorid
Dimethylsilandiylbis(2-butyl-4,6-di-ⁱpropyl-1-indenyl)hafniumdichlorid
Dimethylsilandiylbis(2-ⁱpropyl-4,5-di-ⁱpropyl-1-indenyl)hafniumdichlorid
Dimethylsilandiylbis(2-^{t}butyl-4,6-di-ⁱpropyl-1-indenyl)hafniumdichlorid
Dimethylsilandiylbis(2-trimethylsilyl-4,6-di-ⁱpropyl-1-indenyl)hafniumdichlorid
Dimethylsilandiylbis(2-phenyl-4,6-di-ⁱpropyl-1-indenyl)hafniumdichlorid
Dimethylsilandiylbis(2-methyl-1-benzindenyl)hafniumdichlorid
Dimethylsilandiylbis(2-ethyl-1-benzindenyl)hafniumdichlorid
Dimethylsilandiylbis(2-propyl-1-benzindenyl)hafniumdichlorid
Dimethylsilandiylbis(2-butyl-1-benzindenyl)hafniumdichlorid
Dimethylsilandiylbis(2-ⁱpropyl-1-benzindenyl)hafniumdichlorid
Dimethylsilandiylbis(2-^{t}butyl-1-benzindenyl)hafniumdichlorid
Dimethylsilandiylbis(2-trimethylsilyl-1-benzindenyl)hafniumdichlorid
Dimethylsilandiylbis(2-phenyl-1-benzindenyl)hafniumdichlorid
Dimethylsilandiylbis(2-methyl-4-phenyl-1-indenyl)hafniumdichlorid
Dimethylsilandiylbis(2-ethyl-4-phenyl-1-indenyl)hafniumdichlorid
Dimethylsilandiylbis(2-propyl-4-phenyl-1-indenyl)hafniumdichlorid
Dimethylsilandiylbis(2-butyl-4-phenyl-1-indenyl)hafniumdichlorid
Dimethylsilandiylbis(2-ⁱpropyl-4-phenyl-1-indenyl)hafniumdichlorid
Dimethylsilandiylbis(2-^{t}butyl-4-phenyl-1-indenyl)hafniumdichlorid
Dimethylsilandiylbis(2-trimethylsilyl-4-phenyl-1-indenyl)hafniumdichlorid
Dimethylsilandiylbis(2-phenyl-4-phenyl-1-indenyl)hafniumdichlorid
Dimethylsilandiylbis(2-methyl-4-naphthyl-1-indenyl)hafniumdichlorid
Dimethylsilandiylbis(2-ethyl-4-naphthyl-1-indenyl)hafniumdichlorid
Dimethylsilandiylbis(2-propyl-4-naphthyl-1-indenyl)hafniumdichlorid
Dimethylsilandiylbis(2-butyl-4-naphthyl-1-indenyl)hafniumdichlorid
Dimethylsilandiylbis(2-ⁱpropyl-4-naphthyl-1-indenyl)hafniumdichlorid
Dimethylsilandiylbis(2-^{t}butyl-4-naphthyl-1-indenyl)hafniumdichlorid
Dimethylsilandiylbis(2-trimethylsilyl-4-naphthyl-1-indenyl)hafniumdichlorid Dimethylsilandiylbis(2-phenyl-4-naphthyl-1-indenyl)hafniumdichlorid
sowie die analogen diphenylsilylenverbrückten Komplexe.

Die Synthese derartiger Komplexverbindungen kann nach an sich bekannten Methoden erfolgen, wobei die Umsetzung der entsprechend substituierten cyclischen Kohlenwasserstoffanionen mit Halogeniden von Titan, Zirkonium, Hafnium, Vanadium, Niob oder Tantal bevorzugt ist. Beispiele für entsprechende Herstellungsverfahren sind u.a. in Brintzinger et al., Journal of Organometallic Chemistry, 369 (1989), S. 359 - 370 beschrieben.

Die nach diesen üblichen Methoden hergestellten ansa-Metallocenkomplexe werden meist in einem Verhältnis von ca. 1 : 1 von rac.- zu meso-Form erhalten.

Bei dem erfinderungsgemäßen Verfahren der photochemischen Umwandlung kann man so vorgehen, daß man die meso-Form, das Racemat oder das Gemisch aus rac.- und meso-Form elektromagnetisch mit einer Wellenlänge von kleiner als 1000 nm, bevorzugt 50 bis 500 nm, beispielsweise mit einer UV-Lampe bestrahlt. Es hat sich als geeignet erwiesen, wenn die Bestrahlung bei Temperaturen von -80°C bis +100°C über einen Zeitraum von 0,01 bis 72 Stunden durchgeführt wird.

Erfindungsgemäß erfolgt die photochemische Umwandlung in Anwesenheit eines enantiomerenreinen Hilfsreagens. Besonders geeignet sind enantiomerenreine Hilfsreagenzien, die bifunktionell sind, insbesondere Dialkoholate.

Von den Dialkoholaten sind diejenigen besonders geeignet, die sich ableiten von Dialkoholen der allgemeinen Formel II 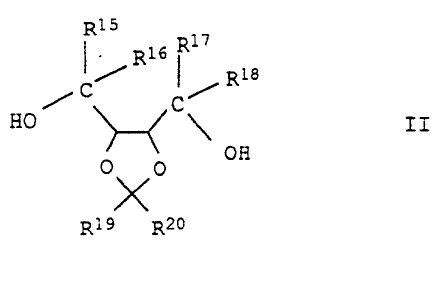 in der die Substituenten folgende Bedeutung haben:
- R¹⁵ bis R¹⁸: Wasserstoff, C₁- bis C₁₀-Alkyl oder C₆- bis C₁₅-Aryl,
- R¹⁹ und R²⁰: Wasserstoff, C₁- bis C₁₀-Alkyl, C₃- bis C₁₀-Cycloalkyl oder C₆- bis C₁₅-Aryl, oder wobei R¹⁹ und R²⁰ zusammen einen C₃- bis C₁₀-Cycloalkylring bilden
oder von 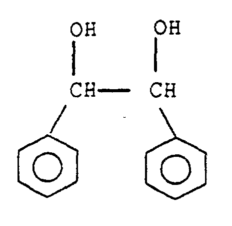 oder von 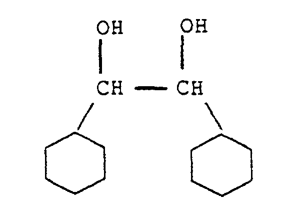 oder besonders bevorzugt von Binaphtholen, insbesondere von 1,1'-Bi-2-naphthol

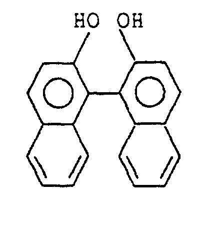

Die enantionmerenreinen Dialkohole sind an sich bekannt und kommerziell erhältlich. Aus diesen Dialkoholen wird dann durch einfache Umsetzung mit einer geeigneten Base wie n-Butyllithium das enantiomerenreine Dialkoholat hergestellt, welches dann als enantiomerenreines Hilfsreagens eingesetzt wird. Selbstverständlich sind auch andere enantiomerenreine Verbindungen wie Dimercaptane oder Diamine als enantiomerenreine Hilfsregenzien hier geeignet.

Diese Verbindungen sowie Verfahren zu ihrer Herstellung sind ebenfalls an sich bekannt.

Mischungen verschiedener enantiomerenreinem Hilfsreagenzien können ebenfalls eingesetzt werden.

Das molare Verhältnis von enantiomerenreiner Hilfsreagens zu dem ansa-Metallocenkomplex beträgt vorzugsweise 0,1 : 1 bis 10 : 1, insbesondere 0,5 : 1 bis 1,5 : 1.

Als besonders geeignet hat es sich erwiesen, wenn man in Anwesenheit eines Lösungsmittels arbeitet. Organische Lösungsmittel wie Tetrahydrofuran, CH₂Cl₂, CHCl₃ und insbesondere aromatische Kohlenwasserstoffe wie Benzol und Toluol werden bevorzugt eingesetzt. Es können auch Lösungsmittelgemische eingesetzt werden.

Als besonders geeignet hat sich folgendes Verfahren erwiesen:
Eine Mischung aus rac.- und meso-Form eines ansa-Metallocenkomplexes oder nur die meso-Form oder nur das Racemat eines ansa-Metallocenkomplexes, das enantiomerenreine Hilfsreagens und das Lösungsmittel werden in ein Bestrahlungsgefäß einer UV-Bestrahlungsapparatur eingefüllt, vorzugsweise unter Inertgasatmosphäre. Das enantiomerenreine Hilfsreagens reagiert nun während der Bestrahlung ausschließlich mit einer enantiomerenreinen Form des ansa-Metallocenkomplexes zu einem photoinaktiven Folgeprodukt, während die meso-Form und die andere enantiomerenreine Form isomerisieren. Das photoinaktive Folgeprodukt kann nun nach an sich bekannten Methoden, wie in Brintzinger et al., Journal of Organometallic Chemistry, 232 (1982), S. 233 - 247 beschrieben, durch Umsetzung mit beispielsweise Methyllithium und anschließender Rückspaltung mit gasförmiger HCl in das entsprechende Dichlorid des ansa-Metallocenkomplexes überführt werden. Alternativ kann das Alkoholat auch, wie in der JP-A 05287017 beschrieben, durch Umsetzung mit einem Metallalkyl alkyliert und in situ mit einem Kationenbildner zum polymerisationsaktiven Metalloceniumkation aktiviert werden. Bei der bevorzugten Verwendung von ansa-Metallocenkomplexen als Katalysatoren kann man auch das photoinaktive Folgeprodukt (z. B. Metallocenbinaphtholat) direkt mit üblichen Cokatalysatoren, wie Alumoxanen, als aktive Katalysatorkomponente einsetzen, wie in Waymouth et al., J. Am. Chem. Soc., 112 (1990), S. 4911 - 4914 beschrieben.

Das erfindungsgemäße Verfahren liefert eine quantitative Umwandlung der meso-Form oder des Racemats eines ansa-Metallocenkomplexes oder deren Mischungen in eines seiner Enantiomeren, wobei das Verfahren verfahrenstechnisch einfach und kostengünstig ist. Die enantiomerenreine Form eines ansa-Metallocenkomplexes findet vor allem als Katalysator in der organischen Synthese Verwendung.

### Beispiele

Die photochemische Umwandlung erfolgte durch Bestrahlung mit einer Hg-Dampflampe vom Typ Phillips HPK 125 W.

### Beispiel 1:

### Herstellung von enantiomerenreinem Dimethylsilandiylbis(2-methyl-4-tert.butyl-1-cyclopentadienyl)zirkon-1,1'-bi-2-naphtholat durch Umwandlung eines rac./meso-Gemisches

49 mg (0,1 mmol) eines rac./meso-Gemisches (Molverhältnis 1 : 1) von Dimethylsilandiylbis(2-methyl-4-tert.butyl-1-cyclopentadienyl)zirkondichlorid, 37 mg (0,125 mmol) enantiomerenreines 1,1'-Bi-2-naphtholatdilithium (hergestellt aus R(+)-1,1'-Bi-2-naphthol) und 4 ml abs. Toloul wurden in ein Schlenkgefäß unter Inertgas eingefüllt. Die Bestrahlung erfolgte unter Rühren über einen Zeitraum von 29 Stunden bei einer Temperatur von 40°C. Anschließend wurde von den abgesetzten Feststoffen abdekantiert und das Lösungsmittel im Vakuum abgezogen. Der feste Rückstand wurde in 3 ml Diethylether gelöst und bei -80°C kristallisiert. Man erhielt ein gelbes Pulver. Die quantitative Umwandlung zu enantiomerenreinem Dimethylsilandiylbis-(2-methyl-4-tert.butyl-1-cyclopentadienyl)zirkon-1,1'-bi-2-naphtholat ließ sich durch Messung des spezifischen Drehwertes nachweisen.

R(+)-1,1'Bi-2-naphtholatdilithium:
[α]₅₈₉ = -618° (c = 1, Tetrahydrofuran)

Dimethylsilandiylbis-(2-methyl-4-tert.butyl-1-cyclopentadienyl)zirkon-1,1'-bi-2-naphtholat :
[α]₅₈₉ = - 780° (c = 1, Toluol)
[α]₄₃₆ = - 2620° (c = 1, Toluol)

### Beispiel 2:

### Herstellung von enantiomerenreinem Dimethylsilandiylbis(2-methyl-4-phenyl-1-cyclopentadienyl)zirkon-1,1'-bi-2-naphtholat durch Umwandlung der meso-Form

53 mg (0,1 mmol) meso-Dimethylsilandiylbis(2-methyl-4-phenyl-1-cyclopentadienyl)zirkondichlorid, 37 mg (1,125 mmol) 1,1'-Bi-2-naphtholatdilithium und 5 ml abs. Toluol wurden in ein Schlenkgefäß unter Inertgasatmospähre eingefüllt. Die Bestrahlung erfolgte unter Rühren über einem Zeitraum von 5 Stunden bei 40°C. Anschließend wurde von den abgesetzten Feststoffen abdekantiert und das Lösungsmittel im Vakuum abgezogen. Der feste Rückstand wurde mit Pentan gewaschen und im Vakuum getrocknet. Man erhielt 65,5 mg (≙ 88 %) enantiomerenreines Dimethylsilandiyl-bis(2-methyl-4-phenyl-l-cyclopentadienyl)zirkon-1,1'-bi-2-naphtholat.

R(+)-1,1'-Bi-2-naphtholatdilithium:
[α]₅₈₉ = -618° (c = 1, Tetrahydrofuran)

Dimethylsilandiylbis-(2-methyl-4-phenyl-1-cyclopentadienyl)zirkon-1,1'-bi-2-naphtholat:
[α]₅₈₉ = - 750° (c = 0,05, Toluol)
[α]₄₃₆ = -2100° (c = 0,05, Toluol)

## Patentansprüche

1. Verfahren zur Umwandlung der achiralen meso-Form oder des Racemats eines ansa-Metallocenkomplexes oder deren Mischungen in eines seiner Enantiomeren, **dadurch gekennzeichnet, daß** die Umwandlung photochemisch in Anwesenheit eines enantiomerenreinen Hilfsreagens erfolgt.

2. Verfahren nach Anspruch 1, **dadurch gekennzeichnet, daß** man in Anwesenheit eines organischen Lösungsmittels arbeitet.

3. Verfahren nach den Ansprüchen 1 bis 2, **dadurch gekennzeichnet, daß** die photochemische Umwandlung mit elektromagnetischer Strahlung einer Wellenlänge von kleiner als 1000 nm erfolgt.

4. Verfahren nach den Ansprüchen 1 bis 3, **dadurch gekennzeichnet, daß** das enantiomerenreine Hilfsreagens bifunktionell ist.

5. Verfahren nach den Ansprüchen 1 bis 4, **dadurch gekennzeichnet, daß** als enantiomerenreines Hilfsreagens ein Dialkoholat eingesetzt wird.

6. Verfahren nach den Ansprüchen 1 bis 5, **dadurch gekennzeichnet, daß** als enantiomerenreines Hilfsreagens ein Enantiomer eines Binaphtholats eingesetzt wird.

7. Verfahren nach den Ansprüchen 1 bis 6, **dadurch gekennzeichnet, daß** ansa-Metallocenkomplexe der Formel I 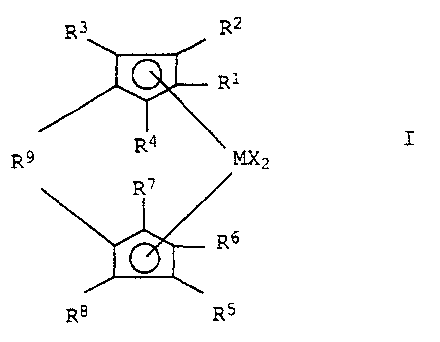 in der die Substituenten und Indices folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl oder -OR¹⁰,
wobei R¹⁰ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R⁸ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹¹)₃ mit
R¹¹ C₁- bis C₁₀-Alkyl, C₆- bis C₁₅-Aryl oder C₃- bis C₁₀-Cycloalkyl,
R⁹ 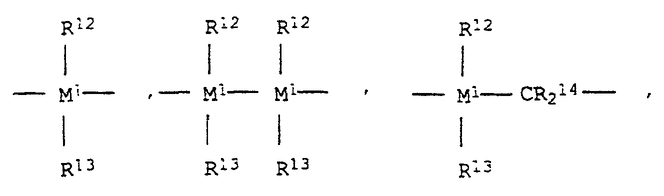 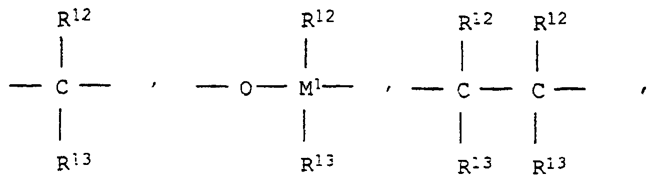 = BR¹², = AlR¹², -Ge-, -Sn-, -O-, -S-, = SO, = SO₂, = NR¹², = CO, = PR¹² oder = P(O)R¹² ist, wobei R¹², R¹³ und R¹⁴
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹² und R¹³ oder R¹² und R¹⁴ jeweils mit den sie verbindenden Atomen einen Ring bilden, und
M¹ Silicium, Germanium oder Zinn ist
eingesetzt werden.

8. Verfahren nach den Ansprüchen 1 bis 7, **dadurch gekennzeichnet, daß** die ansa-Metallocenkomplexe in 2-Position an den Cyclopentadienyl-Ringen substituiert sind.

9. Verfahren nach den Ansprüchen 1 bis 8, **dadurch gekennzeichnet, daß** als ansa-Metallocenkomplexe silylverbrückte Komplexe eingesetzt werden.

## Claims

1. A process for converting the achiral meso form or the racemate of an ansa-metallocene complex or a mixture thereof into one of its enantiomers, which comprises carrying out the conversion photochemically in the presence of an enantiomerically pure auxiliary reagent.

2. A process as claimed in claim 1, wherein the conversion is carried out in the presence of an organic solvent.

3. A process as claimed in claim 1 or 2, wherein the photochemical conversion is carried out using electromagnetic radiation having a wavelength of less than 1000 nm.

4. A process as claimed in any of claims 1 to 3, wherein the enantiomerically pure auxiliary reagent is bifunctional.

5. A process as claimed in any of claims 1 to 4, wherein the enantiomerically pure auxiliary reagent used is a dialkoxide.

6. A process as claimed in any of claims 1 to 5, wherein the enantiomerically pure auxiliary reagent used is an enantiomer of a binaphthoxide.

7. A process as claimed in any of claims 1 to 6, wherein the ansa-metallocene complexes used have the formula I 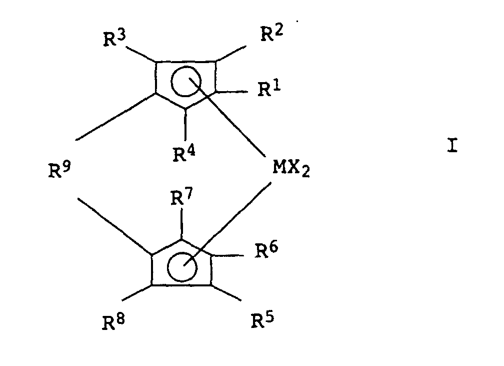 where the substituents and indices have the following meanings:
M is titanium, zirconium, hafnium, vanadium, niobium or tantalum,
X is fluorine, chlorine, bromine, iodine, hydrogen, C₁-C₁₀-alkyl, C₆-C₁₅-aryl or -OR¹⁰,
where R¹⁰ is C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
R¹ to R⁸ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may also together form a cyclic group having from 4 to 15 carbon atoms, or Si(R¹¹)₃ where
R¹¹ is C₁-C₁₀-alkyl, C₆-C₁₅-aryl or C₃-C₁₀-cycloalkyl,
R⁹ is 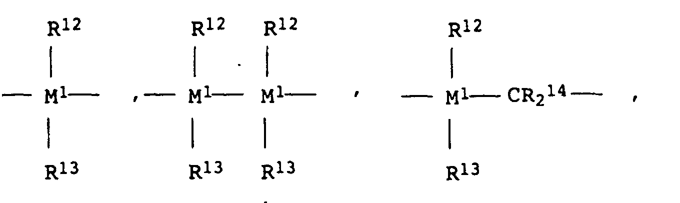 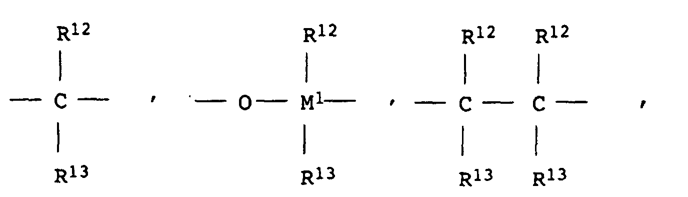 = BR¹², = AlR¹², -Ge-, -Sn-, -O-, -S-, = SO, = SO₂, = NR¹², = CO, = PR¹² or = P(O)R¹² where R¹², R¹³ and R¹⁴
are identical or different and are hydrogen,
halogen, C₁-C₁₀-alkyl, C₁-C₁₀-fluoroalkyl,
C₆-C₁₀-fluoroaryl, C₆-C₁₀-aryl, C₁-C₁₀-alkoxy, C₂-C₁₀-alkenyl, C₇-C₄₀-arylalkyl,
C₈-C₄₀-arylalkenyl or C₇-C₄₀-alkylaryl or R¹² and R¹³ or R¹² and R¹⁴ in each case together with the atoms connecting them form a ring, and
M¹ is silicon, germanium or tin.

8. A process as claimed in any of claims 1 to 7, wherein the ansa-metallocene complexes are substituted in the 2 position of the cyclopentadienyl rings.

9. A process as claimed in any of claims 1 to 8, wherein the ansa-metallocene complexes used are silyl-bridged complexes.

## Revendications

1. Procédé de transformation de la forme méso achirale ou du racémate d'un complexe ansa-métallocène ou de leurs mélanges en un de ses énantiomères, **caractérisé en ce que** la transformation a lieu par voie photochimique en présence d'un réactif auxiliaire pur du point de vue énantiomère.

2. Procédé suivant la revendication 1, **caractérisé en ce qu'**on procède en présence d'un solvant organique.

3. Procédé suivant l'une des revendications 1 et 2, **caractérisé en ce que** la transformation photochimique a lieu à l'aide d'un rayonnement électromagnétique ayant une longueur d'onde inférieure à 1000 nm.

4. Procédé suivant l'une des revendications 1 à 3, **caractérisé en ce que** le réactif auxiliaire pur du point de vue énantiomère est bifonctionnel.

5. Procédé suivant l'une des revendications 1 à 4, **caractérisé en ce que**, comme réactif auxiliaire pur du point de vue énantiomère, on met en oeuvre un dialcoolate.

6. Procédé suivant l'une des revendications 1 à 5, **caractérisé en ce que**, comme réactif auxiliaire pur du point de vue énantiomère, on met en oeuvre un énantiomère d'un binaphtolate.

7. Procédé suivant l'une des revendications 1 à 6, **caractérisé en ce qu'**on met en oeuvre des complexes ansa-métallocène de la formule I : 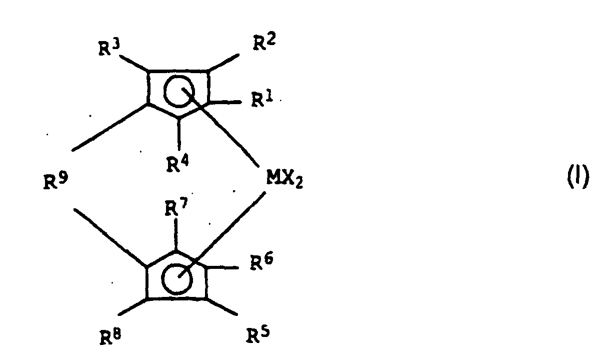 dans laquelle les substituants et indices ont la signification suivante :
M est du titane, du zirconium, de l'hafnium, du vanadium, du niobium ou du tantale,
X est du fluor, du chlore, du brome, de l'iode, de l'hydrogène, un groupe alkyle en C₁-C₁₀, aryle en C₆-C₁₅ ou -OR¹⁰,
où R¹⁰ représente un groupe alkyle en C₁-C₁₀, aryle en C₆-C₁₅, alkylaryle, arylalkyle, fluoroalkyle ou fluoroaryle comportant 1 à 10 atomes de C dans le radical alkyle et 6 à 20 atomes de C dans le radical aryle,
R¹ à R⁸ représentent de l'hydrogène, un groupe alkyle en C₁-C₁₀, cycloalkyle pentagonal à heptagonal, qui à son tour peut porter un radical alkyle en C₁-C₁₀ comme substituant, aryle en C₆-C₁₅ ou arylalkyle, éventuellement deux radicaux voisins pouvant aussi former conjointement des groupes cycliques présentant 4 à 15 atomes de C, ou Si(R¹¹)₃, où
R¹¹ représente un groupe alkyle en C₁-C₁₀, aryle en C₆-C₁₅ ou cycloalkyle en C₃-C₁₀,
R⁹ représente 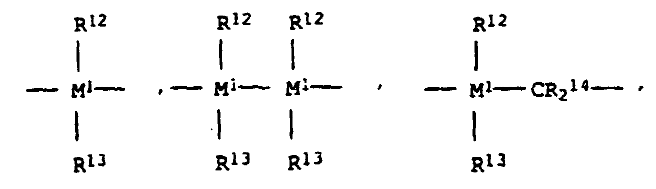 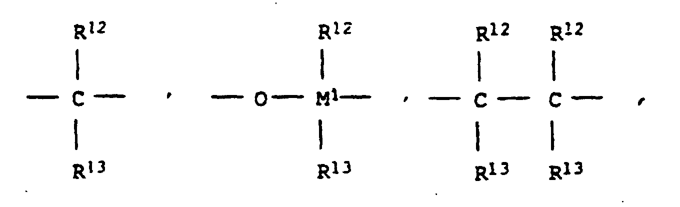
= BR¹², = AIR¹², -Ge-, -Sn-, -O-, -S-, = SO, = SO₂, = NR¹², = CO, =PR¹² ou = P(O)R¹²,
où R¹², R¹³ et R¹⁴ sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹² et R¹³ ou R¹² et R¹⁴ forment chaque fois, avec les atomes qui les relient, un noyau, et
M¹ est du silicium, du germanium ou de l'étain.

8. Procédé suivant l'une des revendications 1 à 7, **caractérisé en ce que** les complexes ansa-métallocène sont en position 2 sur les noyaux de cyclopentadiényle.

9. Procédé suivant l'une des revendications 1 à 8, **caractérisé en ce que**, comme complexe ansa-métallocène, on met en oeuvre des complexes pontés par du silyle.
